# NEUE EUROPÄISCHE PATENTSCHRIFT

(11) **EP 1 733 871 B2**
(45) Veröffentlichungstag und Bekanntmachung des Hinweises auf die Entscheidung über den Einspruch: **12.06.2024**
(45) Hinweis auf die Patenterteilung: 10.09.2014
(21) Anmeldenummer: 06011092.1
(22) Anmeldetag: 30.05.2006
(51) Int. Cl.: A23B 4/16, B32B 27/00, B32B 25/00, B32B 23/00, A23B 4/00, A23L 3/015, A23L 3/3418, A23L 3/3445, B32B 27/30, B32B 27/32, B32B 27/34, B32B 27/36, B32B 27/08

(54) **Verfahren zum Haltbarmachen von Waren in einer Kunststoff-Folienverpackung**
Procedure for making durable goods in a plastic foil packing
Procédé pour rendre durables de marchandises contenues dans un emballage de feuille en matière plastique

(30) Priorität: 15.06.2005 DE 102005027811
(43) Veröffentlichungstag der Anmeldung: 20.12.2006
(73) Patentinhaber: Wipak Walsrode GmbH & Co. KG, 29699 Bomlitz (DE)
(72) Erfinder: Jacobsen Sven, Dr., 29683 Bad Fallingbostel (DE); Opitz Klaus-Dieter, 29649 Wietzendof (DE); Bade Bernd, 31582 Nienburg (DE)
(74) Vertreter: Kröncke, Rolf

(56) Entgegenhaltungen:
- EP-A- 0 217 253
- EP-A- 0 765 818
- EP-A- 1 080 880
- EP-A- 1 566 346
- WO-A-2005/007518
- US-A1- 2002 018 891
- US-A1- 2002 090 522
- US-A1- 2002 142 116
- Innovative Food Science & Emerging Technologies 6 (2005), S 51-58

## Beschreibung

Die Erfindung betrifft ein Verfahren zum Haltbarmachen und/oder Keimarm- oder Keimfreimachen von Waren in einer Kunststoff-Folienverpackung und eine zugehörige Verpackungseinheit aus Verpackung und Ware.

In letzter Zeit ist insbesondere für den Export das Bedürfnis entstanden, folienverpackte Waren so haltbar zu machen, dass eine nachträgliche Kontaminierung sicher ausgeschlossen werden kann. Um dies gewährleisten zu können, werden die betreffenden Waren in einer möglichst reißfesten, bzw. ohne Hilfsmittel schwer zerstörbaren und rundum fest verschweißten Metall- oder Kunststoff-Folienverpackung haltbar gemacht, d.h. durch Pasteurisieren mehr oder weniger keimarm oder durch Sterilisieren keimfrei.

Grundsätzlich bereitet die Behandlung keine Schwierigkeiten, da für die gängigen Sterilisations- und Pasteurisierungsverfahren hinlänglich druck- und temperaturstabile Verpackungsmaterialien bekannt sind. Beispielsweise werden Metallfolien oder ein- oder mehrschichtige Polymerfolien, die wiederum metallisierte (metallbedampfte) Schichten enthalten können, verwendet.

Für manche Waren ist es nun erwünscht, diese nicht vakuumverpackt, sondern in einer Gasatmosphäre, meist aus Schutzgas, anbieten zu können. Dies kann einerseits für die Präsentation der Waren vorteilhaft wirken, andererseits aber auch die Haltbarkeit verderblicher Waren verbessern.

Die EP 0 765 818 A1 beschreibt gasdichte und in geringem Maße druckfeste Kunststofffolienverpackungen mit eingesiegeltem Aufreißstreifen. Es werden Tests angegeben, mit denen bei leichtem Unterdruck von 0,6 und 1,1 Bar geprüft wird, ob die Verpackung dicht bleibt.

Die EP 1 566 346 A1 beschreibt einen ähnlichen Beutel mit Aufreißstreifen.

Die EP 1 080 880 A1 gibt ein Verpackungsmaterial aus einer Monofolie oder einem Folienverbund an, das teilweise mit einem Toner bedruckt ist. Vorzugsweise ist eine Metallfolie oder eine metallbeschichtete Kunststofffolie enthalten.

Die US 2002/0142116 A1 beschreibt eine Verpackungsfolie für die Herstellung eines Beutels mit einer Barriereschicht aus einer Metallfolie.

Die EP 0 217 253 A2 beschreibt eine wenigstens einseitig metallisierte Kunststofffolie für die Verpackung von Genuss- und Lebensmitteln.

Auch die US 2002/0018891 A1, US 2002/0090522 A1 und WO 20051007518A2 beschreiben eine Mehrschichtfolie mit wenigstens drei Schichten und Gasbarriereeigenschaften, die mit Metall oder einem Metalloxid bedampft ist, also als Gasbarriere eine dünne Metallisierung enthält.

Bei einer abgeschlossenen Verpackung mit Gas in ihrem Innenraum ist die nachfolgende Pasteurisierung oder Sterilisation problematisch.

Um Waren mit temperaturempfindlichen Inhaltsstoffen schonender behandeln zu können, ist man dazu übergegangen, das Haltbarmachen dieser Waren unter höherem Druck bei gleichzeitig niedrigerer Temperatur, d.h. möglichst Raumtemperatur oder darunter, durchzuführen. Die Behandlungsdrücke reichen bis zu mehreren Hundert oder Tausend Megapascal. Unter diesen extremen Bedingungen leiden die Verpackungsfolien von Gas enthaltenden Verpackungen erheblich. Gerade die sonst gerne für diesen Zweck verwendeten innerhalb eines Mehrschichtverbundes teilweise metallisierten Folien werfen Blasen, reißen oder trennen sich an kaschierten Schichtgrenzen auf.

Der Erfindung liegt daher die Aufgabe zugrunde sich bei Hochdruckbehandlung typischerweise ergebende Probleme zu vermeiden und ein Verfahren zur Verfügung zu stellen, mit dem empfindliche Waren unter hohem Druck in einer Kunststoff-Folienverpackung behandelt werden können, und zwar auch dann, wenn die verschlossene Verpackung ein Gas enthält.

Zur Lösung dieser Aufgabe ist bei einem gattungsgemäßen Verfahren zum Haltbarmachen und/oder Keimarm- oder Keimfreimachen von Waren in einer Kunststoff-Folienverpackung gemäß Anspruch 1 vorgesehen, dass die Ware rundum in eine Verpackung eingesiegelt und anschließend unter Hochdruck behandelt und dabei keimarm oder keimfrei gemacht wird und dass als Verpackungsfolie eine mehrschichtige Polymerfolie verwendet wird, die wenigstens an ihrer zur Ware weisenden Oberfläche eine wenigstens zweischichtig coextrudierte Siegelschicht besitzt, die eine Außenschicht oder äußere Siegellage aus einem heißsiegelbaren Material und wenigstens eine ≥ 2 µm dicke polymere Gasbarriereschicht enthält.

Unter einer Hochdruckbehandlung wird eine im Allgemeinen in einem Autoklaven bzw. einer speziellen Apparatur stattfindende Behandlung unter extrem hohen Drücken zwischen etwa 4000 und 20 000 bar (400 bis 2000 MPa), häufig zwischen 600 und 800 MPa, verstanden, die auch als HPP ("high pressure processing" oder "high pressure pasteurisation") bezeichnet wird. Hierzu wird die verpackte Ware in eine Behandlungskammer gebracht, in der der Druck allseitig mit Hilfe eines im Allgemeinen flüssigen Druckübertragungsmediums (Wasser) aufgebracht werden kann. Die hohen Drücke setzen sich bis ins Innere der Verpackung fort, d.h. die verpackte Ware wird komprimiert, und verschiedene Keime werden abgetötet.

Die Hochdruckbehandlung von Lebensmitteln ist beispielsweise beschrieben in: M.F. San Martin et al., Critical Reviews in Food Science and Nutrition, 42(6):627-645 (2002), "Food Processing by High Hydrostatic Pressure".

Für das Verfahren ist es bei begasten Verpackungen erforderlich, dass das Verpackungsmaterial elastisch oder deformierbar (komprimierbar) ist. Dieses Erfordernis wird von Polymerfolien, einschließlich dickerer Polymerfolien (bis zu mehreren mm dick) generell erfüllt.

Bei dem erfindungsgemäßen Verfahren findet die Druckbehandlung vorzugsweise bei Drücken von wenigstens 200 MPa (2000 bar) und insbesondere bei Drücken zwischen 400 und 2000 MPa, vorzugsweise 500 und 1200 MPa und weiter vorzugsweise 600 bis 900 MPa statt.

Überraschender Weise wurde gefunden, dass die erfindungsgemäße Mehrschichtfolie diesen Drücken auch dann standhält, wenn die Verpackung begast ist, oder wenn die Ware selbst entgasen kann, weil sie gas- oder flüssigkeitshaltig ist, während beispielsweise metallisierte Folien ohne Barriereschicht in der warenseitigen Siegelschicht für derartig hohe Drücke ungeeignet sind.

Vorzugsweise wird innerhalb des erfindungsgemäßen Verfahrens ein die Ware enthaltender, durch Heißsiegeln abgeschlossener Innenraum der Verpackung entgast und/oder begast. D.h., der Verpackungsinnenraum kann evakuiert sein, oder er kann begast sein, wobei vorzugsweise vor dem Begasen mit Schutzgas die Umgebungsluft entzogen, d.h. der Innenraum ebenfalls evakuiert wird. Alternativ wird der Innenraum während des Verpackungsvorgangs so mit Schutzgas gespült, dass eine intakte Schutzgasatmosphäre entsteht.

Als Schutzgase für die Begasung werden vorzugsweise eingesetzt: Stickstoff, Stickoxide, Kohlendioxid, Sauerstoff oder Mischungen mit einer oder mehrerer dieser Komponenten.

Verpackungsmaschinen für die Herstellung von Kunststoff- und Folienverpackungen und ebenso für die Herstellung begaster Verpackungen sind bekannt und brauchen daher hier nicht beschrieben zu werden.

Unter einem Einsiegeln der Ware in die Verpackung wird hier ein Heißsiegeln verstanden. Dabei werden Bereiche der Oberfläche der Verpackungsfolie oder einer an wenigstens einer Oberfläche vorhandenen sogenannten Siegelschicht so weit aufgeschmolzen, dass sich zwei gegeneinander gepresste oberflächlich aufgeschmolzene Folienbereiche verbinden, wobei eine (Heiß)siegelnaht entsteht. Für das Heißsiegeln geeignete Materialien sind grundsätzlich im Stande der Technik bekannt. Bewährt haben sich verschiedene thermoplastische Materialien, insbesondere Polyolefine wie Polypropylen und Polyethylen, einschließlich deren Mischungen und Copolymerisate untereinander und mit anderen Polymeren wie z.B. Vinylacetat (EVA, PVA).

Als Verpackungsfolie wird innerhalb der Verpackung wenigstens eine mehrschichtige Polymerfolie verwendet, oder die Verpackung besteht insgesamt aus einer solchen Folie, die dann vorzugsweise zu einem Schlauchbeutel geformt sein kann. Die mehrschichtige Polymerfolie kann auch mit anderen Verpackungsteilen, einschichtigen Folien oder Formpressteilen verbunden sein. Es können auch verschiedene Ausführungsformen der erfindungsgemäßen Folie in einer Verpackungseinheit verbunden werden. Wenigstens eine der Folien kann eine tiefziehbare Folie sein.

Die für das erfindungsgemäße Verfahren verwendete Mehrschicht-Verpackungsfolie kann insgesamt ca. 30 bis 700 µm dick sein, vorzugsweise zwischen 40 und 200 µm, insbesondere 50 bis 100 µm.

Die Mehrschichtfolie enthält außerhalb der Siegelschicht eine Träger- oder Verstärkungsschicht aus einem thermoplastischen Polymer der Gruppe Polyolefin, Polyester, Polyamid, aus Copolymeren mit oder zwischen diesen Polymeren oder Mischungen mit oder zwischen diesen Polymeren wie im Anspruch 1 definiert. Das Polymer der Träger- oder Verstärkungsschicht ist dabei jeweils biaxial oder monoaxial orientiert sein. Materialien für die Trägerschicht sind u.a. Polyethylenterephthalat (MOPET, BOPET), Polyamid 6, und verschiedene Polypropylene.

Die erfindungsgemäß verwendete Mehrschichtfolie kann außerdem eine mechanische Verstärkungsschicht, z.B. aus Polyamid enthalten. Die Schichtdicken von Verstärkungsschichten liegen vorzugsweise im Bereich zwischen 1 und 10 µm, weiter vorzugsweise ca. 2 bis ca. 7 µm, während Trägerschichten vorzugsweise zwischen ca. 5 und 50 µm insbesondere ca. 10 bis 30 µm dick sein können.

Die Schichten sind innerhalb der Mehrschichtfolie in der üblichen Weise durch Kaschieren vorgefertigter Einzelfolien verbunden. Als Verbindungsmittel zwischen den Einzelfolien der Mehrschichtfolie ist der zeit Zweikomponenten-Polyurethan-Kaschierkleber bevorzugt.

Wesentlich für die Erfindung ist jedoch, dass die Gasbarriereschicht in der zur Ware weisenden Siegelschicht mit dem Siegelschichtmaterial und gegebenenfalls weiteren Lagen coextrudiert wird. Zwischen den einzelnen Lagen der coextrudierten Siegelschicht können Haftvermittler zum Einsatz kommen, wie im Stand der Technik zu coextrudierten Siegelschichten als solches bekannt.

Unter einer Gasbarriereschicht wird eine solche Schicht aus einem thermoplastischen Polymer verstanden, deren Gasdurchlässigkeit, meist gemessen an der Sauerstoffdurchlässigkeit, möglichst gering ist. Dem Fachmann sind geeignete Gasbarriereschichten und Verfahren zur Bestimmung der Barriereeigenschaften bekannt. Vorliegend erfolgt die Bestimmung gemäß DIN 53380. Erfindungsgemäße Schichten besitzen Gasdichtigkeiten von unter 10, vorzugsweise unter 5, besonders bevorzugt unter 2 (cm³/m² d bar O₂).

In bevorzugter Weiterbildung der Erfindung ist die Gasbarriereschicht eine Schicht mit überwiegendem Anteil an EVOH (Ethylen-Vinylalkohol-Copolymerisat), PVOH (Propylen-Vinylalkohol-Copolymerisat) oder PVDC (Polyvinylidenchlorid), einschließlich solcher Materialien, die Mischungen und/oder Copolymerisate unter oder mit den genannten Polymeren enthalten.

Die Gasbarriereschicht, die auch als innerhalb der Siegelschicht coextrudierte Gasbarrierelage bezeichnet werden könnte, ist vorzugsweise ca. 2 bis 12 µm dick, weiter vorzugsweise 3 bis 7 µm. Die zur Ware weisende Außenschicht (oder Außenlage) der coextrudierten Siegelschicht ist nicht über 80 µm dick.

Die coextrudierte Siegelschicht ist eine wenigstens dreischichtig coextrudierte Siegelschicht mit zwei jeweils außenliegenden Siegelschichtlagen und einer innenliegenden Gasbarriereschicht.

Gemäß einer besonders vorteilhaften Weiterbildung des Verfahrens ist innerhalb der mehrschichtigen Verpackungsfolie ein Druckindikator vorgesehen, der durch irreversible Veränderung das Aufbringen hoher Drücke von größer 200 MPa auf die Verpackungsfolie anzeigt. Der Druckindikator kann ein Farbstoff sein, der unter Druck seine Farbe ändert. Alternativ kann es sich um einen mechanischen Druckindikator handeln, der bei hohem Druck zerstört wird oder seine Form charakteristisch ändert. Die Zerstörung des mechanischen Druckindikators kann durch Farbfreisetzung oder entsprechende Maßnahmen angezeigt werden.

Vorzugsweise befindet sich der Druckindikator innerhalb einer Folienschicht oder zwischen zwei Folienschichten, insbesondere innerhalb einer definierten (Teil-)Fläche der Folie.

Die mit dem Verfahren verpackte und keimarm oder keimfrei gemachte Ware kann eine verderbliche Ware sein. Besonders bevorzugt ist das erfindungsgemäße Verpackungsverfahren für Lebensmittel, einschließlich mit Schutzgas begaster Lebensmittel, insbesondere Frischfleisch, Fleisch- und Wurstwaren. Ebenso vorteilhaft können andere verderbliche Waren, d.h. andere Lebensmittel, Pharmazeutika oder Kosmetika mit dem Verfahren nach der Erfindung verpackt und haltbar gemacht werden. Das Verfahren eignet sich weiterhin gut für die Verpackung keimfrei oder keimarm zu machender nicht-essbarer Waren, insbesondere zur Verpackung von medizinischen Geräten, Sanitätsartikeln und dergleichen.

Gerade für diese Waren ist es häufig auch gewünscht, dass die für das Verfahren verwendete Mehrschichtfolie optisch transparent ist, damit die Ware für den Verbraucher sichtbar ist und kontrolliert werden kann. Die erfindungsgemäße Mehrschichtfolie oder eine der für das Verfahren an einer Verpackung verwendeten Mehrschichtfolien kann daher vorzugsweise auch optisch transparent ausgebildet sein.

Die Erfindung umfasst weiterhin eine Verpackungseinheit aus einer durch Heißversiegeln abgeschlossenen Kunststoff-Folienverpackung und einer darin Hochdruck-behandelten Ware gemäß Anspruch 13, die u. a. dadurch gekennzeichnet ist, dass die Kunststoff-Folienverpackung eine mehrschichtige Polymerfolie enthält, die wenigstens an ihrer zur Ware weisenden Oberfläche eine wenigstens dreischichtig coextrudierte Siegelschicht besitzt, die eine Außenschicht aus einem heißsiegelbaren Material und wenigstens eine ≥ 2 µm dicke polymere Gasbarriereschicht enthält.

Die Folien der Polymer-Mehrschichtfolie sind allgemein solche, wie oben für das Verfahren beschrieben. Ebenso die Gasbarriereschicht, bevorzugt eine Schicht mit überwiegendem Anteil an EVOH, PVOH oder PVDC. Die zur Ware weisende äußere Siegelschichtlage ist nicht über 80 µm dick.

Innerhalb der Mehrschicht-Verpackungsfolie ist vorzugsweise ein Druckindikator enthalten, der das Aufbringen hoher Drücke von größer 200 MPa auf die Verpackungsfolie durch eine irreversible Veränderung anzeigt. Diese Veränderung kann von solcher Natur sein, dass sie entweder mit einem Detektionsgerät oder bereits mit dem bloßen Auge zu erkennen ist.

Die Ware kann sich in einer Schutzgasatmosphäre befinden, die vorzugsweise aus Stickstoff, Stickoxid, Edelgas, Kohlendioxid, Sauerstoff oder Mischungen verschiedener dieser Komponenten besteht, und ist dennoch ohne Beschädigung oder Zerstörung der Verpackungsfolie mit einem Hochdruck-Pasteurisierungsverfahren (HPP) behandelbar.

### BEISPIELE

Die für das erfindungsgemäße Verfahren einzusetzende Mehrschichtfolie hat grundsätzlich folgenden Aufbau:
1.- wenigstens eine Schicht (Trägerschicht) oder mehrere, durch Kaschierkleber verbundene Einzelschichten, die ihrerseits mehrere coextrudierte Lagen enthalten können,
2.- geeigneter Kaschierklebstoff, 2-4 µm Auftragsdicke
3.- coextrudierte Siegelschicht mit wenigstens einer außenliegenden Siegellage und einer Gasbarriereschicht der oben näher ausgeführten Art.

Die Schichten zu 1. können metallisierte Schichten (eine oder mehrere) umfassen.

### beispielhafte Aufbauten sind:

### Beispiel 1:

| | |
|---|---|
| 12 µ | biaxial orientiertes Polyethylenterephthalat |
| 4 µ | 2-Komponenten PU-Kaschierklebstoff |
| 50 µ | 5-schichtig coextrudierte Polyethylen-Siegelschicht mit innenliegender Barriereschicht aus EVOH (3 bis 7 µ) und die Barriereschicht einschließenden Haftvermittlerschichten (5µ) |

### Beispiel 2:

| | |
|---|---|
| 12 µ | Polyamid 6 |
| 4 µ | 2-Komponenten PU-Kaschierklebstoff |
| 50 µ | 5-schichtig coextrudierte Polyethylen-Siegelschicht mit innenliegender Barriereschicht aus EVOH (3 bis 7 µ) und die Barriereschicht einschließenden Haftvermittlerschichten (5µ) |

für EVOH kann jeweils bei entsprechendem Aufbau und entsprechenden Schichtdicken ein anderes Barrierematerial (wie oben beschrieben) verwendet werden. Ebenso sind andere im Stand der Technik für den entsprechenden Zweck verwendete Kaschierklebstoffe und andere Trägerschichten möglich.

### Vergleichsbeispiel:

| | |
|---|---|
| 12 µ | biaxial orientiertes Polyethylenterephthalat mit Al bedampft (ca. 100 nm) |
| 4 µ | 2-Komponenten PU-Kaschierklebstoff |
| 50 µ | PE-Siegelschicht |

Das Polyethylen für die Siegelschichten bzw. Siegellagen ist vorzugsweise ein LDPE oder LLDPE.

Aus den Folien gemäß Beispielen 1 bis 3 wird eine Folienverpackung gefertigt, in die durch Heißsiegeln eine begaste Ware (mit CO₂/N₂ Gemisch begaster Rohschinken in Scheiben) eingesiegelt wird. Die Verpackungseinheit aus begaster Ware und Verpackung wird in einem kommerziellen HPP-Gerät (Avure Technologies AB, Schweden) für 20 Minuten bei Raumtemperatur und 600 MPa behandelt.

Das erfindungsgemäße Verfahren führte mit den Follen gemäß Beispielen 1 und 2 zu Verpackungseinheiten, die nach einer Behandlung in der HPP-Apparatur (wie vorstehend angegeben) keine visuell erkennbaren Defekte aufwiesen.

Nach einer HPP-Behandlung an einer Verpackungseinheit, die mit einer Verpackungsfolie gemäß Vergleichsbeispiel hergestellt war, war diese Verpackung dagegen unbrauchbar. Durch die Behandlung kam es zu blasenförmigen Einschlüssen und Ablösungen einzelner Schichtbereiche.

Die Erfindung ermöglicht ein Haltbarmachen verderblicher Waren oder allgemein ein Keimarm- oder Keimfreimachen von Waren in einer Kunststoff-Folienverpackung durch hohen Druck.

## Patentansprüche

1. Verfahren zum Keimarm- oder Keimfreimachen von Waren in einer Kunststoff-Folienverpackung, wobei die Ware rundum in eine Verpackung eingesiegelt und anschließend unter Hochdruck behandelt und dabei keimarm oder keimfrei gemacht wird und wobei eine mehrschichtige Polymerfolie als Verpackungsfolie verwendet wird, **dadurch gekennzeichnet, dass** die mehrschichtige Polymerfolie i) wenigstens eine Schicht aus jeweils bi- oder monoaxial orientiertem Polypropylen (PP), Polyethylenterephthalat (PET) oder Polyamid (PA) oder aus mit oder zwischen diesen Polymeren gebildeten Mischungen oder Copolymeren und ii) wenigstens an ihrer zur Ware weisenden Oberfläche eine Siegelschicht enthält, wobei die Schichten innerhalb der mehrschichtigen Polymerfolie durch Kaschieren vorgefertigter Einzelfolien aus diesen Schichten verbunden sind und die Siegelschicht eine wenigstens dreischichtig coextrudierte Siegelschicht mit zwei bezüglich der Siegelschicht jeweils außenliegenden Siegelschichtlagen aus einem heißsiegelbaren Material und einer innenliegenden Gasbarriereschicht ist, wobei die Außenschicht nicht über 80 µm dick ist und die wenigstens eine polymere Gasbarriereschicht mit einer gemäß DIN 53380 gemessenen Gasdichtigkeit von unter 10 (cm³/m² d bar O₂) ≥ 2 µm dick ist.

2. Verfahren nach Anspruch 1, **dadurch gekennzeichnet, dass** die Druckbehandlung bei wenigstens 200 MPa, vorzugsweise bei zwischen 300 und 2000 MPa, weiter vorzugsweise zwischen 500 und 800 MPa stattfindet.

3. Verfahren nach Anspruch 1 oder 2, **dadurch gekennzeichnet, dass** ein die Ware enthaltender durch Heißsiegeln abgeschlossener Innenraum der Verpackung im Zuge des Verpackungsvorgangs entgast und/oder begast wird.

4. Verfahren nach einem der Ansprüche 1 bis 3, **dadurch gekennzeichnet, dass** die Ware im Zuge des Verpackungsvorgangs mit einem Schutzgas, vorzugsweise Stickstoff, einem Stickoxid, Kohlendioxid, Sauerstoff oder Mischungen mit einer oder mehreren dieser Komponenten, begast wird.

5. Verfahren nach einem der Ansprüche 1 bis 4, **dadurch gekennzeichnet, dass** als mehrschichtige Verpackungsfolie eine einheitliche Folie verwendet wird oder dass innerhalb einer Verpackung mehrere verschiedene Folien verwendet werden.

6. Verfahren nach Anspruch 5, **dadurch gekennzeichnet, dass** wenigstens eine der Verpackungsfolien eine tiefziehbare Folie ist.

7. Verfahren nach einem der Ansprüche 1 bis 6, **dadurch gekennzeichnet, dass** die Gasbarriereschicht eine Schicht mit überwiegendem Anteil an EVOH, PVOH oder PVDC ist.

8. Verfahren nach einem der Ansprüche 1 bis 7, **dadurch gekennzeichnet, dass** die Gasbarriereschicht wenigstens 2 µm, vorzugsweise 2 bis 10 µm, insbesondere 3 bis 7 µm dick ist.

9. Verfahren nach einem der Ansprüche 1 bis 8, **dadurch gekennzeichnet, dass** innerhalb der mehrschichtigen Verpackungsfolie ein Druckindikator vorgesehen ist, der durch irreversible Veränderung das Aufbringen hoher Drücke von größer 2000 bar (200 MPa) auf die Verpackungsfolie anzeigt.

10. Verfahren nach Anspruch 9, **dadurch gekennzeichnet, dass** der Druckindikator ein Farbstoff ist, der unter Druck seine Farbe ändert.

11. Verfahren nach Anspruch 9 oder 10, **dadurch gekennzeichnet, dass** der Druckindikator innerhalb einer Folienschicht oder zwischen zwei Folienschichten, vorzugsweise bereichsweise innerhalb einer definierten Fläche der Folie, vorliegt.

12. Verfahren nach einem der Ansprüche 1 bis 11, **dadurch gekennzeichnet, dass** die Ware eine verderbliche Ware, insbesondere ein Lebensmittel, ein Kosmetikum oder ein Pharmazeutikum, oder eine keimfrei oder keimarm zu machende nicht-essbare Ware, insbesondere ein medizinisches Gerät oder ein Sanitätsartikel ist.

13. Verpackungseinheit aus einer durch Heißversiegeln abgeschlossenen Kunststoff-Folienverpackung und einer darin durch Hochdruckbehandlung keimfrei oder keimarm gemachten Ware, **dadurch gekennzeichnet, dass** die Kunststoff-Folienverpackung eine mehrschichtige Polymerfolie enthält, die i) wenigstens eine Schicht aus jeweils bi- oder monoaxial orientiertem Polypropylen (PP), Polyethylenterephthalat (PET) oder Polyamid (PA) oder aus mit oder zwischen diesen Polymeren gebildeten Mischungen oder Copolymeren und ii) wenigstens an ihrer zur Ware weisenden Oberfläche eine Siegelschicht enthält, wobei die Schichten innerhalb der mehrschichtigen Polymerfolie durch Kaschieren vorgefertigter Einzelfolien aus diesen Schichten verbunden sind und die Siegelschicht eine wenigstens dreischichtig coextrudierte Siegelschicht mit zwei bezüglich der Siegelschicht jeweils außenliegenden Siegelschichtlagen aus einem heißsiegelbaren Material und einer innenliegenden Gasbarriereschicht ist, wobei die Au-ßenschicht nicht über 80 µm dick ist und die wenigstens eine polymere Gasbarriereschicht mit einer gemäß DIN 53380 gemessenen Gasdichtigkeit von unter 10 (cm³/m² d bar O₂) ≥ 2 µm dick ist.

14. Verpackungseinheit nach Anspruch 13, **dadurch gekennzeichnet, dass** die Gasbarriereschicht eine Schicht mit überwiegendem Anteil an EVOH, PVOH oder PVDC ist.

15. Verpackungseinheit nach Anspruch 13 oder 14, **dadurch gekennzeichnet, dass** die Ware sich in einer Schutzgasatmosphäre befindet, die vorzugsweise aus Stickstoff, Stickoxid, Kohlendioxid, Sauerstoff oder Mischungen verschiedener dieser Komponenten besteht.

16. Verpackungseinheit nach einem der Ansprüche 13 bis 15, **dadurch gekennzeichnet, dass** innerhalb der mehrschichtigen Verpackungsfolie ein Druckindikator vorgesehen ist, der durch irreversible Veränderung das Aufbringen hoher Drücke von größer 2000 bar (200 MPa) auf die Verpackungsfolie anzeigt.

## Claims

1. Procedure for making products in a plastic film packaging low-germ or germ-free, wherein the products are sealed all round in a packaging and then treated under high pressure and thereby made low-germ or germ-free, and wherein a multilayer polymer film is used as the packaging film, **characterised in that** that the multilayer polymer film contains i) at least one layer of respectively bi- or monoaxially orientated polypropylene (PP), polyethylene terephthalate (PET) or polyamide (PA) or of mixtures or copolymers formed with or between these polymers and ii) a sealing layer at least on its surface facing the goods, wherein the layers within the multi-layer polymer film are joined by laminating prefabricated individual films of these layers and the sealing layer is an at least three-layer coextruded sealing layer with two respectively outer sealing layer plies each localized on the outside with respect to the sealing layer and an inner gas barrier layer, wherein the outer layer is not more than 80 µm thick and the at least one polymeric gas barrier layer is ≥ 2 µm thick with a gas tightness of less than 10 (cm³/m² d bar O₂) measured according to DIN 53380.

2. Procedure according to claim 1, **characterised in that** the pressure treatment takes place at least 200 MPa, preferably between 300 and 2000 MPa, more preferably between 500 and 800 MPa.

3. Procedure according to claim 1 or 2, **characterised in that** an interior space of the packaging containing the products and is closed by heat sealing is degassed and/or gassed in the course of the packaging operation.

4. Procedure according to one of claims 1 to 3, **characterised in that** the products are gassed with a shielding gas, preferably nitrogen, a nitrogen oxide, carbon dioxide, oxygen or mixtures with one or more of these components, in the course of the packaging Procedure.

5. Procedure according to one of claims 1 to 4, **characterised in that** a uniform film is used as a multilayer packaging film or **in that** several different films are used within a packaging.

6. Procedure according to claim 5, **characterised in that** at least one of the packaging films is a thermoformable film.

7. Procedure according to one of claims 1 to 6, **characterised in that** the gas barrier layer is a layer with a predominant proportion of EVOH, PVOH or PVDC.

8. Procedure according to one of claims 1 to 7, **characterised in that** the gas barrier layer is at least 2 µm, preferably 2 to 10 µm, in particular 3 to 7 µm thick.

9. Procedure according to one of claims 1 to 8, **characterised in that** a pressure indicator is provided within the multilayer packaging film, which indicates the application of high pressures of greater than 2000 bar (200 MPa) to the packaging film by irreversible change.

10. Procedure according to claim 9, **characterised in that** the pressure indicator is a dye which changes its colour under pressure.

11. Procedure according to claim 9 or 10, **characterised in that** the pressure indicator is present within a film layer or between two film layers, preferably in certain areas within a defined area of the film.

12. Procedure according to one of claims 1 to 11, **characterised in that** the product therein is a perishable product, in particular a food, a cosmetic or a pharmaceutical, or a non-edible product which is to be rendered germ-free or low-germ, in particular a medical device or a sanitary article.

13. Packaging unit comprising a plastic film packaging closed by heat sealing and a product which has been rendered sterile or low-germ therein by high-pressure treatment, **characterised in that** the plastic film packaging contains a multilayer polymer film which i) contains at least one layer of bi- or monoaxially oriented polypropylene (PP), polyethylene terephthalate (PET) or polyamide (PA) or of mixtures or copolymers formed with or between these polymers and ii) contains a sealing layer at least on its surface facing the product, wherein the layers within the multilayer polymer film are bonded by laminating prefabricated individual films of these layers and the sealing layer is an at least three-layer coextruded sealing layer with two respectively outer sealing layer plies each localized on the outside with respect to the sealing layer and an inner gas barrier layer, wherein the outer layer is not more than 80 µm thick and the at least one polymeric gas barrier layer is ≥ 2 µm thick with a gas tightness of less than 10 (cm³/m² d bar O₂) measured according to DIN 53380.

14. packaging unit according to claim 13, **characterised in that** the gas barrier layer is a layer with a predominant proportion of EVOH, PVOH or PVDC.

15. packaging unit according to claim 13 or 14, **characterised in that** the product is in a protective gas atmosphere which preferably consists of nitrogen, nitrogen oxide, carbon dioxide, oxygen or mixtures of various of these components.

16. packaging unit according to one of claims 13 to 15, **characterised in that** a pressure indicator is provided within the multilayer packaging film, which indicates the application of high pressures of greater than 2000 bar (200 MPa) to the packaging film by irreversible change.

## Revendications

1. Procédé de stérilisation ou d'aseptisation de marchandises dans un emballage en film plastique, la marchandise étant scellée tout autour dans un emballage et ensuite traitée sous haute pression et ainsi stérilisée ou aseptisée et un film polymère multicouche étant utilisé comme film d'emballage, **caractérisé en ce que** le film polymère multicouche est utilisé comme film d'emballage, que le film polymère multicouche contient i) au moins une couche de polypropylène (PP), de polyéthylène téréphtalate (PET) ou de polyamide (PA) orientés respectivement bi- ou monoaxialement ou de mélanges ou de copolymères formés avec ou entre ces polymères et ii) au moins sur sa surface orientée vers le produit une couche de scellage, les couches étant reliées à l'intérieur du film polymère multicouche par contrecollage de films individuels préfabriqués à partir de ces couches et la couche de scellage étant une couche de scellage coextrudée à au moins trois couches avec deux couches de scellage situées chacune à l'extérieur par rapport à la couche de scellage et constituées d'un matériau thermosoudable et d'une couche intérieure formant barrière aux gaz, la couche extérieure n'ayant pas une épaisseur supérieure à 80 µm et la au moins une couche polymère formant barrière aux gaz ayant une étanchéité aux gaz, mesurée selon la norme DIN 53380, inférieure à 10 (cm³/m² d bar O₂) ≥ 2 µm d'épaisseur.

2. Procédé selon la revendication 1, **caractérisé en ce que** le traitement de pression a lieu à au moins 200 MPa, de préférence entre 300 et 2000 MPa, de préférence encore entre 500 et 800 MPa.

3. Procédé selon la revendication 1 ou 2, **caractérisé en ce qu'**un espace intérieur de l'emballage, fermé par thermoscellage et contenant la marchandise, est dégazé et/ou gazéifié au cours de l'opération d'emballage.

4. Procédé selon l'une des revendications 1 à 3, **caractérisé en ce que** la marchandise est gazée au cours de l'opération d'emballage avec un gaz protecteur, de préférence de l'azote, un oxyde d'azote, du dioxyde de carbone, de l'oxygène ou des mélanges avec un ou plusieurs de ces composants.

5. Procédé selon l'une des revendications 1 à 4, **caractérisé en ce qu'**un film uniforme est utilisé comme film d'emballage multicouche ou **en ce que** plusieurs films différents sont utilisés dans un emballage.

6. Procédé selon la revendication 5, **caractérisé en ce qu'**au moins l'un des films d'emballage est un film thermoformable.

7. Procédé selon l'une des revendications 1 à 6, **caractérisé en ce que** la couche barrière aux gaz est une couche à prédominance d'EVOH, de PVOH ou de PVDC.

8. Procédé selon l'une des revendications 1 à 7, **caractérisé en ce que** la couche barrière aux gaz a une épaisseur d'au moins 2 microns, de préférence de 2 à 10 microns, en particulier de 3 à 7 microns.

9. Procédé selon l'une quelconque des revendications 1 à 8, **caractérisé en ce qu'**il est prévu, à l'intérieur du film d'emballage multicouche, un indicateur de pression qui indique, par une modification irréversible, l'application de pressions élevées supérieures à 2000 bars (200 MPa) sur le film d'emballage.

10. Procédé selon la revendication 9, **caractérisé en ce que** l'indicateur de pression est un colorant qui change de couleur sous l'effet de la pression.

11. Procédé selon la revendication 9 ou 10, **caractérisé en ce que** l'indicateur de pression est présent à l'intérieur d'une couche de film ou entre deux couches de film, de préférence par zones à l'intérieur d'une surface définie du film.

12. Procédé selon l'une des revendications 1 à 11, **caractérisé en ce que** le produit est un produit périssable, en particulier un produit alimentaire, cosmétique ou pharmaceutique, ou un produit non comestible à rendre aseptique ou à faible teneur en germes, en particulier un appareil médical ou un article sanitaire.

13. Unité d'emballage constituée d'un emballage en film plastique fermé par thermoscellage et d'un produit rendu aseptique ou pauvre en germes à l'intérieur de celui-ci par traitement sous haute pression, **caractérisée en ce que** l'emballage en film plastique contient un film polymère multicouche qui contient i) au moins une couche de polypropylène (PP), de polyéthylène téréphtalate (PET) ou de polyamide (PA) orientés respectivement bi- ou mono-axialement ou de mélanges ou copolymères formés avec ou entre ces polymères et ii) au moins sur sa surface tournée vers le produit une couche de scellage, les couches étant liées à l'intérieur du film polymère multicouche par contrecollage de films individuels préfabriqués à partir de ces couches et la couche de scellage étant une couche de scellage coextrudée à au moins trois couches avec deux couches de couche de scellage situées respectivement à l'extérieur par rapport à la couche de scellage et constituées d'un matériau thermosoudable et d'une couche de barrière aux gaz située à l'intérieur, la couche extérieure ne dépassant pas 80 µm d'épaisseur et la au moins une couche polymère formant barrière aux gaz ayant une étanchéité aux gaz, mesurée selon la norme DIN 53380, inférieure à 10 (cm³/m² d bar O₂) ≥ 2 µm d'épaisseur.

14. Unité d'emballage selon la revendication 13, **caractérisée en ce que** la couche barrière aux gaz est une couche contenant principalement de l'EVOH, du PVOH ou du PVDC.

15. Unité d'emballage selon la revendication 13 ou 14, **caractérisée en ce que** le produit se trouve dans une atmosphère de gaz protecteur, qui se compose de préférence d'azote, d'oxyde d'azote, de dioxyde de carbone, d'oxygène ou de mélanges de différents composants.

16. Unité d'emballage selon l'une des revendications 13 à 15, **caractérisée en ce qu'**il est prévu, à l'intérieur du film d'emballage multicouche, un indicateur de pression qui indique, par une modification irréversible, l'application de pressions élevées supérieures à 2000 bars (200 MPa) sur le film d'emballage.
